# EUROPEAN PATENT APPLICATION

(11) **EP 2 635 029 A2**
(43) Date of publication of application: **04.09.2013**
(21) Application number: 11836675.6
(22) Date of filing: 28.10.2011
(51) Int. Cl.: H04N 7/32

(54) **VIDEO INFORMATION ENCODING METHOD AND DECODING METHOD**

(30) Priority: 28.10.2011 KR 20110111661; 28.10.2010 KR 20100105789
(71) Applicant: Electronics And Telecommunications Research Institute, Daejeon-si 305-700 (KR); University-Industry Cooperation Group of Kyung Hee University, Gyeonggi-do 446-701 (KR)
(72) Inventor: JEONG, Se Yoon, Daejeon-si 306-769 (KR); KIM, Hui Yong, Daejeon-si 305-770 (KR); LIM, Sung Chang, Daejeon 305-805 (KR); CHO, Suk Hee, Daejeon-si 305-763 (KR); LEE, Jin Ho, Daejeon-si 300-787 (KR); LEE, Ha Hyun, Seoul 131-819 (KR); KIM, Jong Ho, Daejeon-si 305-804 (KR); CHOI, Jin Soo, Daejeon-si 305-750 (KR); KIM, Jin Woong, Daejeon-si 305-761 (KR); AHN, Chie Teuk, Daejeon-si 305-340 (KR); PARK, Gwang Hoon, Seongnam-si Gyeonggi-do 463-831 (KR); KIM, Kyung Yong, Suwon-si Gyeonggi-do 443-470 (KR); LEE, Han Soo, Yongin-si Gyeonggi-do 446-783 (KR)
(74) Representative: Betten & Resch
(86) International application number: PCT/KR2011/008167
(87) International publication number: WO 2012/057583

(57) **Abstract**

The present invention relates to a method and apparatus for encoding and decoding video information. The video information encoding method according to the present invention comprises: a step of performing a prediction on a current block; and a step of entropy-encoding the predicted information and transmitting the encoded information. The step of performing a prediction comprises: a step of acquiring motion information on a neighboring block from the neighboring block of the current block; and a step of determining motion information on the current block on the basis of the acquired motion information. The transmitting step also involves transmitting information required for the prediction of the current block. According to the present invention, the complexity of video compression and the quantity of transmitted information may be reduced.

## Description

### [Technical Field]

The present invention relates to a video encoding technology, and more particularly, to a method of predicting motion information of a current block using motion information of neighboring blocks.

### [Background Art]

Recently, in accordance with the expansion of broadcasting services having high definition (HD) resolution in the country and around the world, many users have been accustomed to a high resolution and definition video, such that many organizations have conducted many attempts to develop the next-generation video devices. In addition, as the interest in HDTV and ultra high definition (UHD) having a resolution four times higher than that of HDTV have been increased, a compression technology for a higher-resolution and higher-definition video has been demanded.

As the video compression technology, there are an inter prediction technology of predicting pixel values included in a present picture from a picture before and/or after the present picture, an intra prediction technology of predicting pixel values included in a present picture using pixel information in the present picture, a weight prediction technology for preventing deterioration in video quality due to an illumination change, an entropy encoding technology of allocating a short code to symbols having a high appearance frequency and a long code to symbols having a low appearance frequency. Particularly, when prediction for a current block is performed in a skip mode, a prediction block is generated using only values predicted from a previous encoded region, and separate motion information or a residual signal is not transmitted from an encoder to a decoder. Video data may be efficiently compressed by these video compression technologies.

Meanwhile, as one of methods for encoding motion information, a merge method has been used. Merge in a coding unit (hereinafter, referred to as 'CU') or merge in a prediction unit (hereinafter, referred to as 'PU') may be performed. When the merge is performed in the CU or PU (hereinafter, referred to as a 'block' for convenience of explanation), information on whether merge is performed for each block partition and information on with what block of neighboring blocks adjacent to a current block (a left adjacent block of the current block, an upper adjacent block of the current block, a temporal adjacent block, of the current block, or the like) merge is performed need to be transmitted. Therefore, an information amount of the merge increases.

### [Disclosure]

### [Technical Problem]

The present invention provides a method of encoding and decoding video information using a merge method.

The present invention also provides a method and an apparatus for inferring motion information of a current block using partition information of a coding unit.

The present invention also provides a method and an apparatus for inferring motion information of a current block using motion information of another block in the same coding unit.

The present invention also provides a method and an apparatus capable of reducing complexity of video compression processing and a transmission information amount by inducing motion information of a current block rather than directly transmitting the motion information of the current block.

### [Technical Solution]

In an aspect, there is provided a method of encoding video information, the method including: performing prediction for a current block; and entropy-encoding and transmitting the predicted information, wherein the performing of the prediction includes: obtaining motion information of neighboring blocks from the neighboring blocks of the current block; and determining motion information of the current block based on the obtained motion information, and wherein in the transmitting, information required to predict the current block is transmitted together with the predicted information.

The neighboring block may be a block belonging to a coding unit to which the current block belongs, and the motion information of the neighboring block may include partition information of the coding unit.

In the determining of the motion information of the current block, the motion information of the neighboring block and the same motion information as the motion information of the neighboring block may be excluded from merge candidates of the current block when the neighboring block belongs to a coding unit to which the current block belongs.

In the performing of the prediction, the motion information of the current block may not be merged with the same motion information as motion information of another block belonging to a coding unit to which the current block belongs.

When a motion information candidate that is not the same as motion information of another block belonging to a coding unit to which the current block belongs is present among the motion information of the neighboring blocks of the current block and the motion information of the current block is predicted in a merge mode, in the determining of the motion information of the current block, the motion information of the current block may be merged with the motion information candidate.

When the current block is PART_NxN and motion information of three blocks belonging to a coding unit to which the current block belongs is the same, in the performing of the prediction, the motion information of the current block may not be merged with the motion information of the three blocks belonging to the coding unit to which the current block belongs.

In another aspect, there is provided a method of decoding video information, the method including: receiving a bit stream; entropy-decoding video information included in the bit stream; and performing prediction for a current block based on the entropy-decoded video information, wherein the performing of the prediction includes: obtaining motion information of neighboring blocks from the neighboring blocks of the current block; and determining motion information of the current block based on the obtained motion information.

The neighboring block may be a block belonging to a coding unit to which the current block belongs, and the motion information of the neighboring block may include partition information of the coding unit.

In the determining of the motion information of the current block, the motion information of the neighboring block and the same motion information as the motion information of the neighboring block may be excluded from merge candidates of the current block when the neighboring block belongs to a coding unit to which the current block belongs.

In the performing of the prediction, the motion information of the current block may not be merged with the same motion information as motion information of another block belonging to a coding unit to which the current block belongs.

When a motion information candidate that is not the same as motion information of another block belonging to a coding unit to which the current block belongs is present among the motion information of the neighboring blocks of the current block and the motion information of the current block is predicted in a merge mode, in the determining of the motion information of the current block, the motion information of the current block may be merged with the motion information candidate.

When the current block is PART_NxN and motion information of three blocks belonging to a coding unit to which the current block belongs is the same, in the performing of the prediction, the motion information of the current block may not be merged with the motion information of the three blocks belonging to the coding unit to which the current block belongs.

### [Advantageous Effects]

According to the present invention, it is possible to improve compression performance of video information and reduce a transmission amount thereof.

According to the present invention, it is possible to reduce a transmission amount of merge information even in the case of applying merge to a current block.

According to the present invention, motion information of a current block is inferred using partition information of a coding unit or a prediction unit, thereby making it possible to reduce complexity of video compression processing and a transmission amount of information.

According to the present invention, motion information of a current block is inferred using motion information of another block in the same coding unit, thereby making it possible to reduce complexity of video compression processing and a transmission amount of information.

### [Description of Drawings]

FIG. 1 is a block diagram showing a configuration of a video encoding apparatus according to an exemplary embodiment of the present invention.
FIG. 2 is a block diagram showing a configuration of a video decoding apparatus according to an exemplary embodiment of the present invention.
FIG. 3 is a flow chart schematically describing an example of operations associated with prediction of an encoder and a decoder in a system according to the exemplary embodiment of the present invention.
FIG. 4 is a flow chart schematically describing another example of operations associated with prediction of an encoder and a decoder in a system according to the exemplary embodiment of the present invention.
FIG. 5 is a diagram schematically describing an example of division of a single coding unit (CU) into several types of prediction units (PUs).
FIG. 6 is a diagram schematically showing several types of PUs capable of being divided from a single CU.
FIG. 7 is a diagram schematically describing merge targets of two PUs divided from a CU.
FIG. 8 is a diagram schematically showing a method of obtaining candidate motion information from blocks of determined positions.
FIG. 9 is a diagram schematically showing a concept of merge applied to the PU.
FIG. 10 is a diagram schematically describing motion information of each PU in the case in which the CU is divided into four PUs.
FIG. 11 is a diagram schematically showing a relationship between the PUs divided from the CU.
FIG. 12 is a diagram schematically showing blocks that may become merge candidate blocks of a current block among neighboring blocks of a current PU when a single CU is divided into two PUs.
FIGS. 13 to 15 are diagrams showing several examples of merging a current block in the case in which a neighboring block and the current block are different blocks in the same CU.
FIG. 16 is a diagram schematically describing an example of determining merge information of a current block using merge information of another block with respect to two blocks in the same CU.
FIGS. 17 to 19 are diagrams schematically showing several examples of determining motion information of a current block using motion information of another block in the case of limiting merge candidate blocks as predetermined neighboring blocks.
FIG. 20 is a flow chart schematically describing operations of an encoder in the system according to the exemplary embodiment of the present invention.
FIG. 21 is a flow chart schematically describing operations of a decoder in the system according to the exemplary embodiment of the present invention.

### [Mode for Invention]

Hereinafter, exemplary embodiments of the present invention will be described in detail with reference to the accompanying drawings. In describing exemplary embodiments of the present invention, well-known functions or constructions will not be described in detail since they may unnecessarily obscure the understanding of the present invention.

It will be understood that when an element is simply referred to as being 'connected to' or 'coupled to' another element without being 'directly connected to' or 'directly coupled to' another element in the present description, it may be 'directly connected to' or 'directly coupled to' another element or be connected to or coupled to another element, having the other element intervening therebetween. Further, in the present invention, "comprising" a specific configuration will be understood that additional configuration may also be included in the embodiments or the scope of the technical idea of the present invention.

Terms used in the specification, 'first', 'second', etc. can be used to describe various components, but the components are not to be construed as being limited to the terms. The terms are only used to differentiate one component from other components. For example, the 'first' component may be named the 'second' component and the 'second' component may also be similarly named the 'first' component, without departing from the scope of the present invention.

Furthermore, constitutional parts shown in the embodiments of the present invention are independently shown so as to represent different characteristic functions. Thus, it does not mean that each constitutional part is constituted in a constitutional unit of separated hardware or one software. In other words, each constitutional part includes each of enumerated constitutional parts for convenience. Thus, at least two constitutional parts of each constitutional part may be combined to form one constitutional part or one constitutional part may be divided into a plurality of constitutional parts to perform each function. The embodiment where each constitutional part is combined and the embodiment where one constitutional part is divided are also included in the scope of the present invention, if not departing from the essence of the present invention.

In addition, some of constituents may not be indispensable constituents performing essential functions of the present invention but be selective constituents improving only performance thereof. The present invention may be implemented by including only the indispensable constitutional parts for implementing the essence of the present invention except the constituents used in improving performance. The structure including only the indispensable constituents except the selective constituents used in improving only performance is also included in the scope of the present invention.

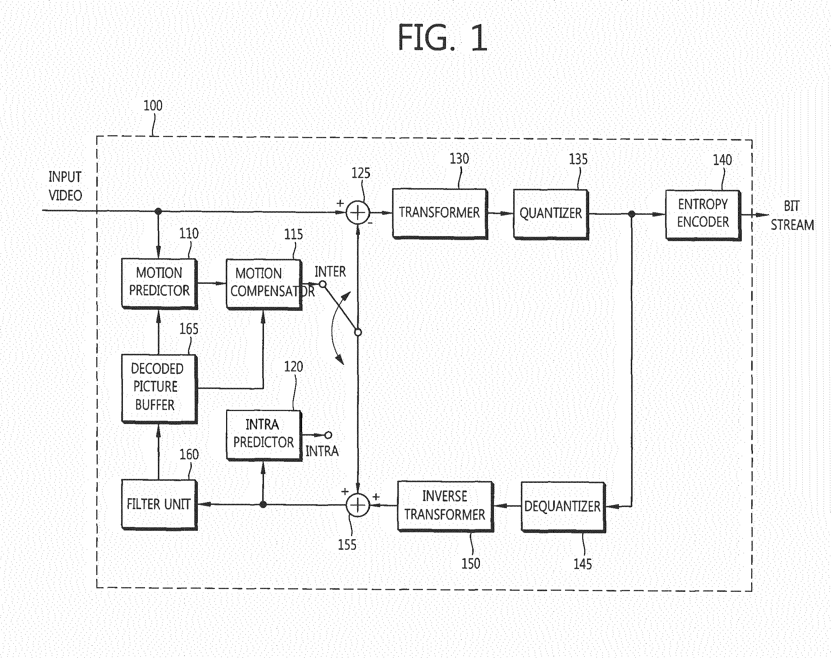

FIG. 1 is a block diagram showing a configuration of a video encoding apparatus according to an exemplary embodiment of the present invention.

Referring to FIG. 1, a video encoding apparatus 100 includes a motion predictor 110, a motion compensator 115, an intra predictor 120, a subtracter 125, a transformer 130, a quantizer 135, an entropy encoder 140, a dequantizer 145, an inverse transformer 150, an adder 155, a filter unit 160, and a decoded picture buffer 165.

The video encoding apparatus 100 may perform encoding on input videos in an intra mode or an inter mode and output bit streams. In the case of the intra mode, the intra predictor 120 may perform prediction, and in the case of the inter mode, the motion predictor 110, the motion compensator 115, and the like, may perform prediction. The video encoding apparatus 100 may generate a prediction block for an input block of the input video and then encode a difference between the input block and the prediction block.

In the case of the intra mode, the intra predictor 120 may perform spatial prediction using pixel values of already encoded blocks adjacent to a current block to generate prediction blocks.

In the inter mode, the motion predictor 110 may search a region optimally matched with the input block in the reference picture stored in the decoded picture buffer 165 during the motion prediction process to obtain a motion vector. The motion compensator 115 may perform the motion compensation using the motion vector and the reference picture stored in the decoded picture buffer 165 to generate the prediction block.

The subtracter 125 may generate a residual block by the difference between the input block and the generated prediction block. The transformer 130 may perform transform on the residual block to output transform coefficients. A residual signal means a difference between an original signal and a prediction signal, a signal in a form in which the difference between the original signal and the prediction signal is transformed, or a signal in which the difference between the original signal and the prediction signal is transformed and quantized. In a block unit, the residual signal may be called a residual block.

The quantizer 135 may quantize the transform coefficient according to quantization parameters to output quantized coefficients.

The entropy encoder 140 may entropy-encode symbols corresponding values calculated in the quantizer 135, encoding parameter values calculated during an encoding process, or the like, according to probability distribution to output the bit stream.

When the entropy-encoding is applied, compression performance of the video encoding may be improved by allocating a small number of bits to the symbols having high generation probability and allocating a large number of bits to the symbols having low generation probability.

For the entropy encoding, encoding methods such as context-adaptive variable length coding (CAVLC), context-adaptive binary arithmetic coding (CABAC), or the like, may be used. For example, the entropy encoder 140 may perform the entropy encoding using a variable length coding/code (VLC) table. The entropy encoder 140 may also perform the entropy encoding by deducing a binarization method of a target symbol and a probability model of a target symbol/bin and using the deduced binarization method and probability model.

The quantized coefficient may be dequantized in the dequantizer 145 and inversely transformed in the inverse transformer 150. The dequantized and inversely transformed coefficient may be generated as a reconstructed residual block, and the adder 155 may generate a reconstructed block using the prediction block and the reconstructed residual block.

The filter unit 160 may apply at least one of a deblocking filter, a sample adaptive offset (SAO), and an adaptive loop filter (ALF) to the reconstructed block or the reconstructed picture. The reconstructed block passing through the filter unit 160 may be stored in the decoded picture buffer 165.

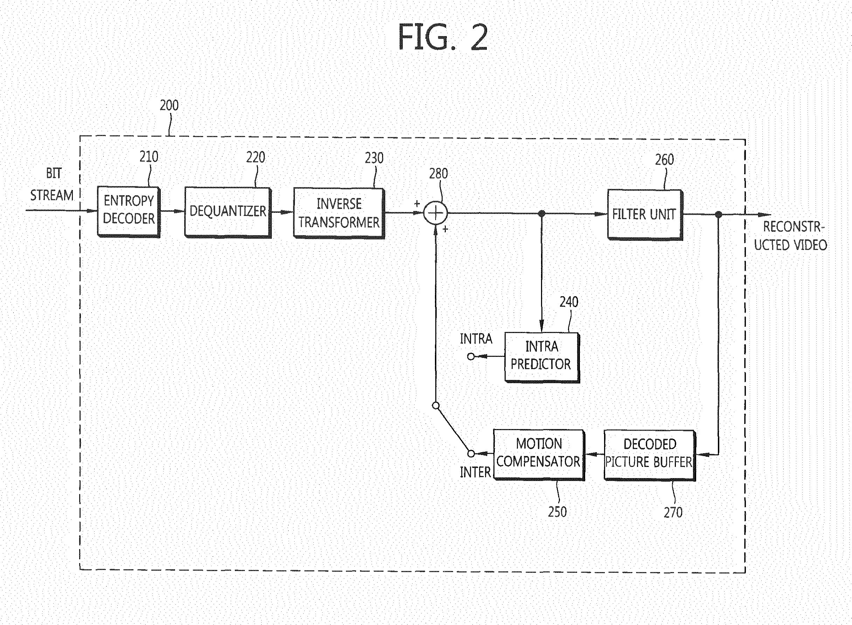

FIG. 2 is a block diagram showing a configuration of a video decoding apparatus according to an exemplary embodiment of the present invention.

Referring to FIG. 2, a video decoding apparatus 200 includes an entropy decoder 210, a dequantizer 220, an inverse transformer 230, an intra predictor 240, a motion compensator 250, a filter unit 260, a decoded picture buffer 270, and an adder 280.

The video decoding apparatus 200 may receive the bit streams output from the encoder and perform the decoding in the intra mode or the inter mode to output the reconstructed picture, that is, the reconstructed picture. In the case of the intra mode, the intra predictor 240 may perform prediction, and in the case of the inter mode, the motion compensator 250 may perform prediction. The video decoding apparatus 200 may obtain a reconstructed residual block from the received bit streams, generate the prediction block and then add the reconstructed residual block to the prediction block to generate the reconstructed block, that is, the reconstructed block.

The entropy decoder 210 may entropy-decode the input bit streams according to the probability distribution to generate a quantized coefficient type of symbols. The entropy decoding method may be performed corresponding to the above-mentioned entropy encoding method.

The quantized coefficients may be dequantized in the dequantizer 220 and be inversely transformed in the reverse transformer 230. The quantized coefficients may be dequantized/inversely transformed to generate the reconstructed residual block.

In the case of the intra mode, the intra predictor 240 may perform spatial prediction using pixel values of already decoded blocks adjacent to a current block to generate prediction blocks. In the case of the inter mode, the motion compensator 250 may perform the motion compensation using the motion vector and the reference picture stored in the decoded picture buffer 270 to generate the prediction block.

The adder 280 may generate the reconstructed block based on the reconstructed residual block and the prediction block. The filter unit 260 may apply at least one of the deblocking filter, the SAO, and the ALF to the reconstructed block. The filter unit 260 outputs the reconstructed picture. The reconstructed picture may be stored in the decoded picture buffer 270 to be used for the inter-picture prediction.

Meanwhile, in the case of performing the inter-prediction on the current block, a prediction mode such as a merge mode, a skip mode, or the like, may be used.

Among them, in the merge mode, motion information of the current block may be merged with motion information of other blocks adjacent thereto. The term 'merge' means that motion information of neighboring blocks of a current block is used as motion information of the current block in the case of performing the inter-prediction. Here, the motion information of the neighboring blocks that may be used as the motion information of the current block may also be represented as a 'motion information candidate' for convenience of explanation. In addition, blocks having the motion information candidate among the neighboring blocks of the current block may also be represented as '(merge) candidate blocks'. Further, the candidate block having the motion information that is to be used as the motion information of the current block among the candidate blocks or the motion information candidate used as the motion information of the current block among the motion information candidates may be represented as a 'merge target'. Therefore, it is to be noted that although the representation that the current block is merged with selected blocks among the candidate blocks may be used for convenience of explanation, it means that the motion information of the current block is merged with the motion information of the candidate blocks, such that the motion information candidate of the candidate blocks is used as the motion information of the current block, as understood by those skilled in the art.

Here, the motion information may include a motion vector, a reference picture index, and an inter prediction mode indicating whether prediction is uni-prediction or bi-prediction and what direction the prediction is performed in the uni-prediction. That is, the inter-prediction mode is related to what reference picture list among reference picture lists is used. In addition, the motion information may also include partition information of the block.

The meaning that two motion information, for example, first motion information and second motion information are the same is that a motion vector, a reference picture, an inter-prediction mode of the first motion information are the same as a motion vector, a reference picture, an inter-prediction mode of the second motion information.

When the merge is performed with respect to the current block, the encoder may transmit information on the merge to the decoder. The information on the merge, which is information indicating whether the current block is merged, may include a merge_flag, a merge_idx, which is information indicating with what block the current block is merged, and the like.

In the case of performing the merge, merge possibility of the current block is confirmed from partition information of the neighboring blocks or partition information of the current block. It is possible to determine whether the merge is performed on the current block and with what neighboring block the current block is merged when the merge is performed on the current block, based on the confirmation result.

In order to transmit all information on the merge such as information on whether the merge is performed on the current block, information on with what block the current block is merged, and the like, to the decoder, a large amount of information needs to be processed and an information transfer amount is large.

In relation to this, the present specification discloses a method of omitting a portion or all of the information on the merge in the case in which a portion or all of the information on the merge needs not to be transmitted and a method of reducing bits required for representing/transmitting merge information by changing a priority of a merge target.

Terms used in the present specification may be defined as follows.

A coding unit (CU) is a basic unit of video encoding/decoding (video information encoding/decoding). A PU (prediction unit), which is a basic unit of prediction, is configured of PU partitions. Each PU partition contains motion information in the case of the inter-prediction.

A merge_flag indicates that motion information of a current block coincides with motion information of neighboring blocks. For example, the merge_flag has a logical value of 1 when the motion information of the current block coincides with the motion information of the neighboring blocks and has a logical value of 0 when the motion information of the current block does not coincide with the motion information of the neighboring blocks. Alternately, it is possible to set the merge_flag value so as to have a logical value of 0 when the motion information of the current block coincides with the motion information of the neighboring blocks and have a logical value of 1 when the motion information of the current block does not coincide with the motion information of the neighboring blocks.

A merge_left_flag indicates a block having the same motion information as that of the current block when two neighboring block targets (a left block, an upper block) having motion information that may be merged are present. For example, the merge_left_flag has a logical value of 1 when the motion information of the current block is the same as that of the left block and has a logical value of 0 when the motion information of the current block is not the same as that of the left block (when the motion information of the current block coincides with that of an upper block). Alternately, it is possible to set the merge_left_flag value so as to have a logical value of 0 when the motion information of the current block is the same as that of the left block and have a logical value of 1 when the motion information of the current block is not the same as that of the left block (when the motion information of the current block coincides with that of an upper block).

A merge index (hereinafter, referred to as 'merge_idx') indicates an index for candidates with which the current block is merged in a merge candidate list When the merge index value is not indicated, it may be inferred that the merge index value has '0'.

The merge candidate list indicates a list in which motion information is stored. Here, the motion information stored in the merge candidate list may be motion information of neighboring blocks adjacent to a current block or motion information of a block collocated with a current block in a reference picture. In addition, the motion information stored in the merge candidate list may be new motion information formed by combining motion information already present in the merge candidate list.

In the present specification, a block means a CU, a PU, a PU partition, or a macro block as described above and includes several pixels. Therefore, those skilled in the art may infer a target represented by a block in required information, a target process, or the like, according to the contents of the present invention described in the present specification.

Hereinafter, a method of omitting transmission of a portion or all of the information on the merge and a method of changing a priority of a merge target will be described in detail with reference to the above-mentioned terms and the accompanying drawings.

The information on the merge includes information (merge_flag) indicating whether a current block is merged, information (merge_left_flag) indicating with motion information of what neighboring block the current block is merged when motion information of a left block and motion information of an upper block are present as motion information of neighboring blocks with which the current block may be merged, information merge_idx indicating using what motion information among motion information in a merge candidate list the current block is merged, a merge candidate list, and the like.

Among the information on the merge, the merge_flag is always necessary information when the merge is applied. Among the information on the merge, the merge_left_flag, the merge_idx, or the like, is not always necessary information but may be conditional necessary information.

For example, only when two different motion information (motion information of a block positioned at the left of a current block and motion information of a block positioned at an upper block of the current block) are present as motion information of neighboring blocks that may be used to merge the current block, whether the motion information of the current block coincides with the motion information of the left block or the motion information of the upper block may be indicated using the merge_left_flag.

In addition, only when the number of motion information present in the merge candidate list is two or more, what motion information is used as the motion information of the current block may be indicated using the merge_idx.

In the case in which the merge is performed, a large amount of merge information is transferred as described. In addition, a larger amount of merge information is required in the case in which the merge is performed on a current PU as compared to the case in which the merge is performed on a current CU.

In this case, when a portion or all of the merge information may be implicitly inferred without explicitly transferring all of the merge information, a transmission amount of the merge information may be reduced. In relation to this, a transmission information amount may be reduced using at least one of the following two methods.
① A method of omitting transmission of a portion or all of merge information to reduce an information amount - the transmission of the merge information may be omitted when there is no possibility that the merge will be applied to the current block.
② A method of improving encoding efficiency of merge information - performance of entropy encoding may be improved by changing the meaning of merge_left_flag according to a shape and a position of a block. For example, the meaning of merge_left_flag may be changed according to a shape of a PU partition and a position of a PU. In addition, the performance of the entropy encoding may be improved by changing of the meaning of merge_idx according to a shape and a position of a block. For example, the meaning of merge_idx may be changed according to a shape of a PU partition and a position of a PU.

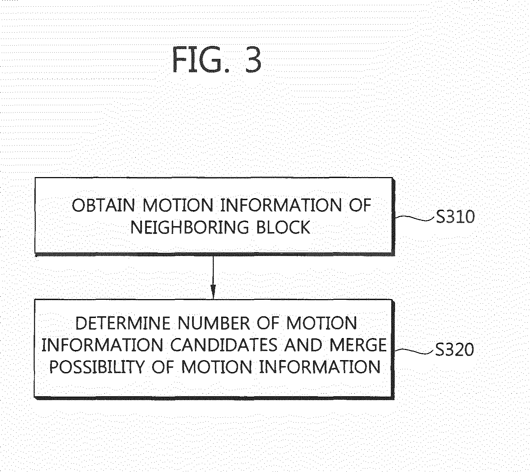

FIG. 3 is a flow chart schematically describing an example of operations associated with prediction of an encoder and a decoder in a system according to the exemplary embodiment of the present invention.

Referring to FIG. 3, an encoder or a decoder first obtains motion information of neighboring blocks (S310). The encoder or the decoder may search neighboring blocks having motion information that may be used to predict motion information of a current block among neighboring blocks of the current block, thereby obtaining the motion information. In addition, positions of the neighboring blocks of which the motion information may be used by the current block may be determined in advance, and only the motion information of the determined neighboring blocks may be used to predict the motion information of the current block.

The encoder or the decoder determines the number of motion information candidates that is used as the motion information of the current block or may be used to predict the motion information of the current block and determines the possibility that the current block will be merged with the motion information candidates (S320). The encoder or the decoder determines the number of motion information of the neighboring blocks that may be used to predict the motion information of the current block with respect to the neighboring blocks of the current block. In addition, the encoder or the decoder judges the possibility that the merge will be applied to the current block.

Based on the above-mentioned operations, the encoder determines the merge of the current block, performs the merges, and encodes required merge information to transmit the required merge information to the decoder. The decoder determines the merge of the current block and performs the merge as described above based on the merge information received from the encoder.

The obtaining and the determining of the motion information described above, the merge of the current block using the motion information, and the like, may be performed in specific modules, for example, the motion predictor, the motion compensator, and the like, in the encoder and the decoder.

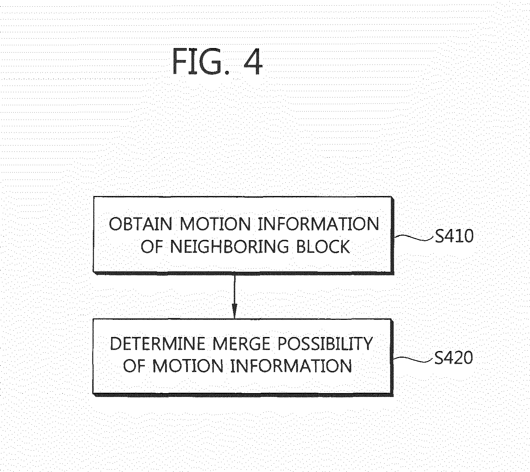

FIG. 4 is a flow chart schematically describing another example of operations associated with prediction of an encoder and a decoder in a system according to the exemplary embodiment of the present invention.

Referring to FIG. 4, an encoder or a decoder first obtains motion information of neighboring blocks (S410). The encoder or the decoder may search neighboring blocks having motion information that may be used to predict motion information of a current block among neighboring blocks of the current block, thereby obtaining the motion information. In addition, positions of the neighboring blocks that may be used as candidate blocks may be determined in advance, and only the motion information of the determined neighboring blocks may be used as motion information candidates of the current block.

The encoder or the decoder determines the merge possibility of the motion information for the current block (S420).

Based on the above-mentioned operations, the encoder determines the merge of the current block, performs the merges, and encodes required merge information to transmit the required merge information to the decoder. The decoder determines the merge of the current block and performs the merge as described above based on the merge information received from the encoder.

The obtaining and the determining of the motion information described above, the merge of the current block using the motion information, and the like, may be performed in specific modules, for example, the motion predictor, the motion compensator, and the like, in the encoder and the decoder.

Meanwhile, the merge method described above with reference to the FIGS. 3 and 4 may be applied in a block unit. Therefore, after whether the merge is applied to the current block is determined, the merge is performed according to the determination. For example, the merge may be applied to the current CU or the current PU. A single CU may be divided into two PUs or four PUs and then encoded. Alternatively, the CU itself may be encoded.

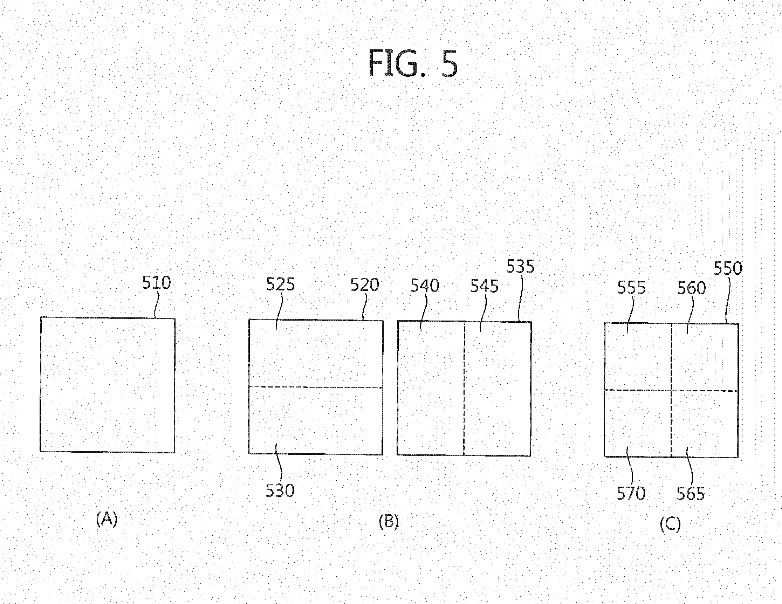

FIG. 5 is a diagram schematically describing an example of division of a single coding unit (CU) into prediction units (PUs).

FIG. 5A schematically shows a single CU 510.

FIG. 5B shows an example of division of a single coding unit (CU) into two PUs. For example, the CU 520 may be divided into two PUs 525 and 530 each having the same width as that of the CU 520 and having a height that is a half of a height of the CU 520. In addition, the CU 535 may be divided into two PUs 540 and 545 each having the same height as that of the CU 535 and having a width that is a half of a width of the CU 535.

FIG. 5C shows an example of division of a single coding unit (CU) into four PUs. For example, a CU 550 may be divided into four PUs 555, 560, 565, and 570 each having a width and a height that are half the width and the height of the CU 550.

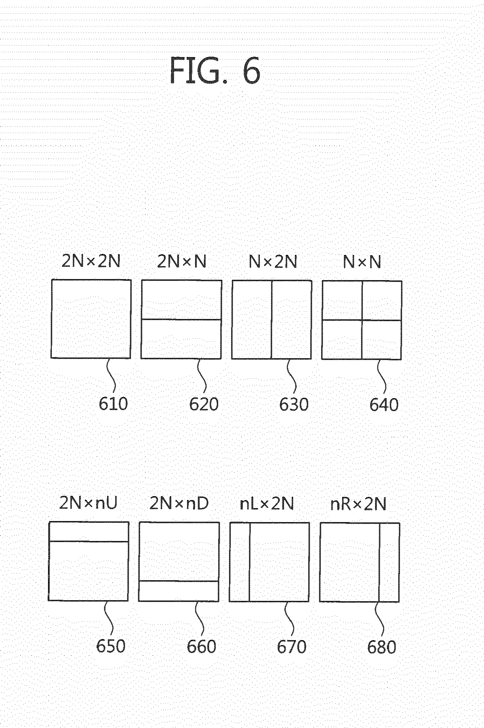

FIG. 6 is a diagram schematically showing several types of PUs capable of being divided from a single CU.

Referring to FIG. 6, a PU 610 in the case in which a single CU block itself is encoded is represented by "PART_2Nx2N". Here, N indicates an integer larger than 0, and 2N, which is the number of pixels, indicates a width and/or a height of a corresponding block.

When the single CU is encoded as two PUs, it may be divided into two PUs 620, which is "PART_2NxN", two PUs 630, which is "PART_Nx2N", two PUs 650, which is "PART_2NxnU", two PUs 660, which is "PART_2NxnD", two PUs 670, which is "PART_nLx2N", two PUs 680, which is "PART_nRx2N", or the like, according to a shape of the PU. Here, each of U, D, L, and R is a representation used instead of N in order to distinguish an asymmetrical shape from a symmetrical shape.

When the single CU is encoded as four PUs, it may be divided into four PUs 640, which is "PART_NxN".

Meanwhile, a method of determining a merge target of a current block according to a partition shape as described above in which the CU is divided into the PUs may be considered.

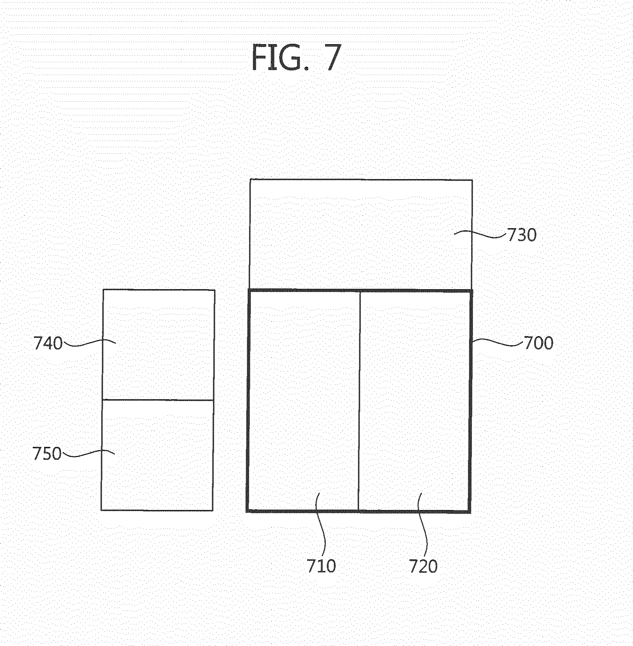

FIG. 7 is a diagram schematically describing merge targets of two PUs divided from a CU. A case in which a current CU 700 is divided into two PUs 710 and 720 and two left blocks 740 and 750 and a single upper block 730 are present as adjacent blocks of the current block 700 is shown in FIG. 7 by way of example.

In the example of FIG. 7, the number of motion information that may be obtained from the neighboring blocks may be two, one, or zero.

In a case in which the motion information may not be obtained, which corresponds to a case in which all of the neighboring blocks 730, 740, and 750 are intra-prediction blocks, the number of available motion information that may be obtained from the surrounding block is 0. In this case, the merge may not be applied in order to predict the current block. Therefore, the merge information needs not to be transmitted to the decoder.

A case in which the number of motion information that may be obtained from the neighboring blocks is 1 corresponds to a case in which any one of the left blocks 740 and 750 and the upper block 730 is an intra prediction block. Since the motion information may not be obtained from the intra prediction block, available motion information becomes one. Therefore, merge_flag indicating whether the merge is performed is required as the merge information. When the merge is performed on the current block, motion information that may be used as the motion information of the current block is only one, such that what motion information becomes a merge target needs not to be separately indicated. Therefore, other information such as merge_idx, merge_left_flag, and the like, need not to be used or transmitted.

As a case in which the number of motion information that may be obtained from the neighboring blocks is 2, a case in which the motion information of one of the left blocks 740 and 750 and the motion information of the upper block 730 are obtained may be considered. In this case, when the two obtained motion information are the same as each other, the same processing as that of the case in which the number of motion information that may be obtained from the neighboring blocks is 1 may be performed. When the two motion information obtained from the neighboring blocks are different, information such as merge_left_flag, and the like, as well as merge_flag may be required as the merge information.

Meanwhile, as shown in FIG. 7, a method of obtaining motion information (candidate motion information) that is to be used to merge the current block only from determined blocks in a neighboring region, rather than obtaining motion information that becomes a merge target from the entire left regions 740 and 750 and the entire upper region 730 of the current block 700, may also be considered.

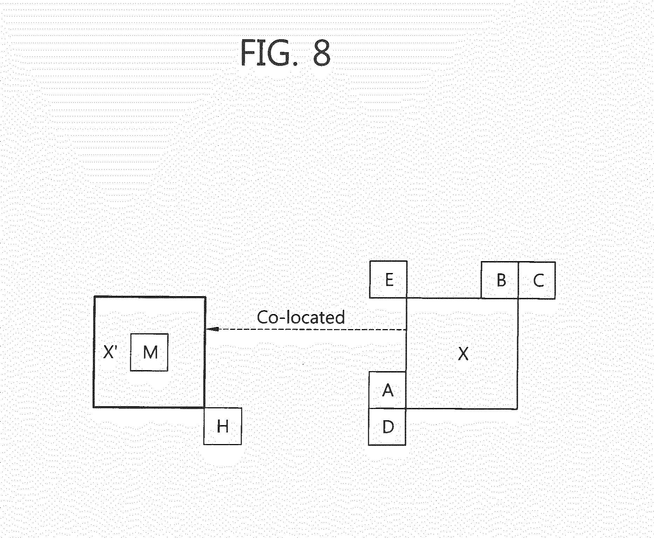

FIG. 8 is a diagram schematically showing a method of obtaining candidate motion information from blocks of determined positions. Referring to FIG. 8, a current block X may be merged by obtaining candidate motion information from a left upper block E, an upper block B, and a right upper block C in an upper neighboring region and a left block A and a left lower block D in a left neighboring region. In addition, the current block X may also be merged by obtaining candidate motion information from a predetermined block M in a co-located block X' and an adjacent block H of the co-located block X'. Here, the co-located block may be a block in a reference picture.

When the neighboring block of the determined position is used as the candidate block for the merge of the current block, the encoder may configure a merge candidate list to be used in a merge mode and set motion information of the current block based on a motion information candidate of the merge candidate list.

For example, the encoder may set the motion information candidate from the neighboring block of the current block (PU or CU). Here, the encoder may set a reference index for using a temporal motion information candidate and set temporally inferred motion information as merge motion information. Here, the temporally inferred motion information means motion information of the co-located block.

To configure the merge candidate list, it is judged whether motion information of corresponding blocks is used to merge the current block in a predetermined sequence, for example, a sequence of A→B→C→D→E→the co-located block with respect to the neighboring blocks A, B, C, D, and E, and the co-located candidate block of FIG. 8. When the motion information of the corresponding blocks may be used to merge the current block, the motion information of the corresponding blocks is input in the merge candidate list.

When the same motion information is present in the merge candidate list, only one of the same motion information remains in the merge candidate list.

The number of motion information in the merge candidate list may be set to a predetermined number. For example, the number of motion information in the merge candidate list may be set to be a maximum of 5.

When a current video is a B video or a current slice is a B slice, a bidirectional merge candidate may be set or a non-scaled bidirectional merge candidate may be set.

In addition, zero (0, 0) motion information may be set as a merge candidate.

In the merge candidate list, the motion information indicated by the merge_idx may be set as the motion information of the current block.

A method of setting the motion information candidate from the neighboring blocks of the current block will be described in more detail. In order to set the motion information candidate, a left upper position of the current block, information on a width and a height of the current block, and information indicating the current block are input. Here, the current block may be the PU. Hereinafter, a case in which the current block is the PU will be described by way of example for convenience of explanation.

A left upper position of the current PU may be given as (xP, yP). Variables indicating a height and a width of the current PU may be represented by (nPSW, nPSH). In addition, an index indicating the current PU among PU partitions present in the current CU may be represented by PartIdx.

When a single CU is divided into two PUs, PartIdx for each PU may have a value of '0' or '1'. For example, a value of PartIdx for a left PU or an upper PU may be set to 0, and a value of PartIdx for a right PU or a lower PU may be set to 1. When a single CU is divided into four PUs, PartIdx for each PU may have a value of '0', '1', '2', or '3'. For example, a value of PartIdx for a left upper PU may be set to 0, a value of PartIdx for a right upper PU may be set to 1, a value of PartIdx for a left lower PU may be set to 2, and a value of PartIdx for a right lower PU may be set to 3.

In an operation of setting a motion information candidate, the following four information: a variable (availableFlagN) indicating whether the neighboring PUs are available, a reference index (refIdxLXN) of the neighboring PUs, a variable (predFlagLXN) indicating whether a prediction list for the neighboring PUs is available, and motion information (for example, a motion vector, mvLXN) for the neighboring PUs may be output. Here, N is a value indicating any one of the neighboring PU A, B, C, D, and E in FIG. 8, and each of the variables or the indices indicates information on the PU indicated by N. Here, X may be replaced with 0 or 1. For example, when X is 0, three information of the above-mentioned four information are mvL0N, refIdxL0N, and predFlagL0N, which means L0 motion information. In addition, when X is 1, three information of the above-mentioned four information are mvL1N, refIdxL1N, and predFlagL1N, which means L1 motion information. Here, L0 means a reference video list 0, and L1 means a reference video list 1.

In order to judge whether the current block and the neighboring PUs (spatial PUs, A, B, C, D, and E of FIG. 8) of the current PU may be used as a merge motion candidate, processes having the following sequence will be performed. (Hereinafter, N may be replaced with A, B, C, D, and E of FIG. 8, and (xN, yN) may be replaced with (xP-1, yP+nPSH), (xP-1, yP+nPSH-1), (xP+nPSW, yP-1), (xP+nPSW-1, yP-1), and (xP-1, yP-1).

When any one of the following conditions is 'true', availableFlagN may be set to '0' and mvLXN may be set to '0,0'.
(1) N is E, and availableFlagD + availableFlagA + availableFlagC + availableFlagB is '4'.
(2) A PU positioned at [xN, yN] may not be used or has been encoded in an intra mode.
(3) A current PU is "PART_2NxN", "PART-2NxnU", or "PART_2NxnD", PartIdx is '1', and a PU (xP, yP-1) of which PartIdx corresponds to '0' and a neighboring PU (xN, yN) has the same motion information as in the following conditions: (a) to (c).
   (a) mvLX[xP, yP-1] == mvLX[xN, yN]
   (b) refIdxLX[xP, yP-1] == refIdxLX[xN, yN]
   (c) predFlagLX[xP, yP-1] == predFlagLX[xN, yN]
(4) A current PU is "PART_Nx2N", "PART_nLx2N", or "PART_nRx2N" PartIdx is '1', and a PU (xP-1, yP) of which PartIdx corresponds to '0' and a neighboring PU (xN, yN) has the same motion information as in the following conditions: (a) to (c).
   (a) mvLX[xP-1, yP] == mvLX[xN, yN]
   (b) refIdxLX[xP-1, yP] == refIdxLX[xN, yN]
   (c) predFlagLX[xP-1, yP] == predFlagLX[xN, yN]
(5) A current PU is "PART_NxN", PartIdx is '3', a PU (xP-1, yP) of which PartIdx corresponds to 2 and a PU (xP-1, yP-1) of which PartIdx corresponds to '0' has the same motion information as in the following conditions: (a) to (c),
   (a) mvLX[xP-1, yP] == mvLX[xP-1, yP-1]
   (b) refIdxLX[xP-1, yP] == refIdxLX[xP-1, yP-1]
   (c) predFlagLX[xP-1, yP] == predFlagLX[xP-1, yP-1]

   A PU (xP, yP-1) of which PartIdx corresponds to 1 and a neighboring PU (xP, yP) has the same motion information as in the following conditions: (a) to (c).
   (a) mvLX[xP, yP-1] == mvLX[xN, yN]
   (b) refIdxLX[xP, yP-1] == refIdxLX[xN, yN]
   (c) predFlagLX[xP, yP-1] == predFlagLX[xN, yN]
(5) A current PU is "PART_NxN", PartIdx is '3', a PU (xP, yP-1) of which PartIdx corresponds to 1 and a PU (xP-1, yP-1) of which PartIdx corresponds to '0' has the same motion information as in the following conditions: (a) to (c),
   (a) mvLX[xP, yP-1] == mvLX[xP-1, yP-1]
   (b) refIdxLX[xP, yP-1] == refIdxLX[xP-1, yP-1]
   (c) predFlagLX[xP, yP-1] == predFlagLX[xP-1, yP-1]

   A PU (xP-1, yP) of which PartIdx corresponds to 2 and a neighboring PU (xP, yP) has the same motion information as in the following conditions: (a) to (c).
   (a) mvLX[xP-1, yP] == mvLX[xN, yN]
   (b) refIdxLX[xP-1, yP] == refIdxLX[xN, yN]
   (c) predFlagLX[xP-1, yP] == predFlagLX[xN, yN]

When the above-mentioned conditions (1) to 5 are not 'true', availableFlagN may be set to '1', and each of mvLXN, refIdxLXN, and predFlagLXN may be set to mvLX[xN, yN], refIdxLX[xN, yN], and predFlagLX[xN, yN].

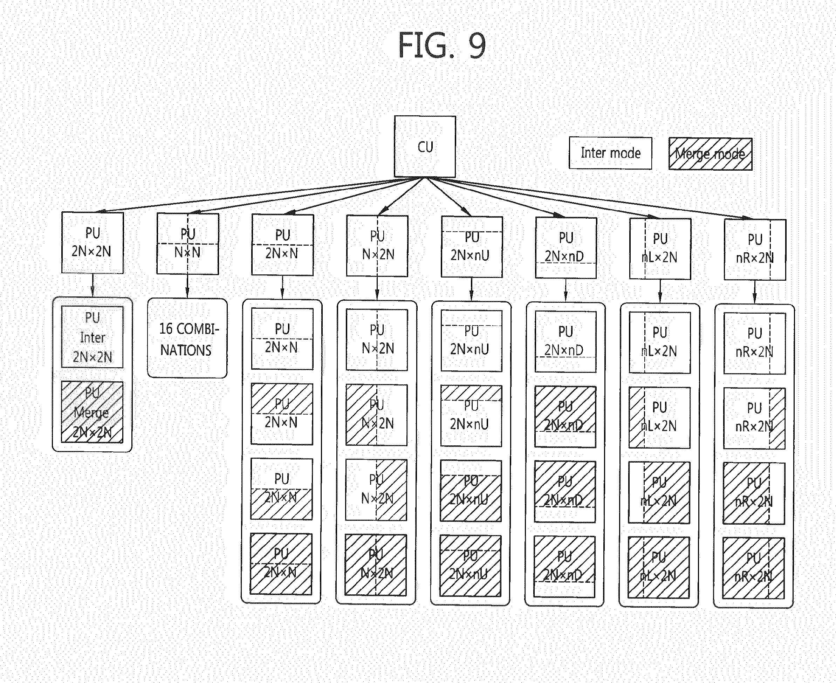

FIG. 9 is a diagram schematically showing a concept of merge applied to the PU.

Referring to FIG. 9, it may be seen that PUs having partition forms described with reference to FIG. 6 are divide from a single CU. Each of the PUs may be merged as shown in FIG. 9. For example, in the case of PART_2Nx2N, all blocks may be predicted and encoded in an inter mode or be encoded by applying merge thereto. Here, the inter mode means a mode in which inter prediction is performed by remaining methods except for a merge mode in an inter prediction mode.

In addition, even in the remaining case in which a single CU is divided into a plurality of PUs, the merge is applied to each partition, that is, each block divided from the CU, as shown. Here, even in the case the CU is divided into the PUs, the merge may be performed at a CU level as shown.

As described above, the number of candidate motion information that may be used for the merge and whether the merge may be used may be determined based on the partition form for of the PUs divided from the CU.

More specifically, in the case in which the current block and the neighboring block are present in the same CU, the motion information of the current block is not merged with the motion information of the neighboring block. Here, the meaning that the current block and the neighboring block are present in the same CU is that the current block and the neighboring block are two partitions present in a single CU.

When two PUs (a first PU (PartIdx=0) and a second PU(PartIdx=1)) are present in the same CU, the first and second PUs do not have the same motion information. Therefore, the merge is not applied between the first and second PUs. That is, the motion information of the first PU and the same motion information as that of the first PU may be allowed not to be added to a merge candidate list of the second PU.

For example, as shown in FIG. 5B, when a single CU is divided into two PUs, the two PUs have different motion information. In the case of FIG. 5B, when two PUs have the same motion information even though the two PUs are divided from a single CU, it may be more efficient to perform an encoding process on the single CU rather than the two PUs. Therefore, when the two PUs are present in the single CU, these two PUs have different motion information.

When the CU is divided into four partitions, for example, when the CU is divided into four PUs, the merge is not applied between PUs that do not have the same motion information between the respective PUs.

For example, as shown in FIG. 5C, when a single CU is divided into four PUs (a first PU (PartIdx=0), a second PU (PartIdx=1), a third PU (PartIdx=2), and a fourth PU (PartIdx=3)), all of the four PUs may not have the same motion information. If the four PUs present in the single CU have the same motion information, it is more efficient to perform encoding at a CU level without dividing the CU into the PUs as described above. Therefore, when the single CU is divided into the four PUs, at least one of these four PUs has different motion information. That is, when all of the first to third PUs have the same motion information, the same motion information as the corresponding motion information may be allowed not to be added to a merge candidate list of the fourth PU.

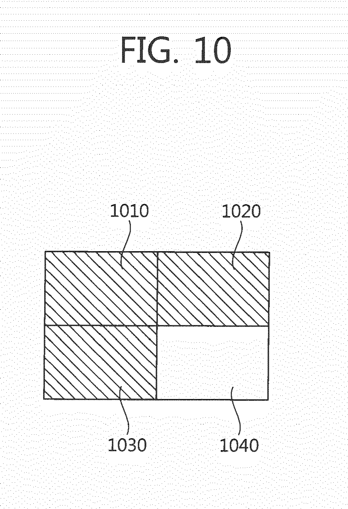

FIG. 10 is a diagram schematically describing motion information of each PU in the case in which the CU is divided into four PUs. Referring to FIG. 10, a single CU is divided into four PUs 1010, 1020, 1030, and 1040.

In FIG. 10, when motion information of the PU 1010 is the same as that of the PU 1030, the PU 1040 may not have the same motion information as that of the PU 1020. If the motion information of the PU 1010 is the same as that of the PU 1030 and the motion information of the PU 1040 is the same as that of the PU 1020, it is more efficient to encode PU partitions divided into a block of the PU 1010 and the PU 1030 and a block of the PU 1020 and the PU 1040 rather than the four PUs. Therefore, in FIG. 10, when motion information of the PU 1010 is the same as that of the PU 1030, the PU 1040 needs to have the motion information different from that of the PU 1020. That is, the motion information of the PU 1020 may be allowed not to be added to a merge candidate list of the PU 1040.

Likewise, in FIG. 10, when the motion information of the PU 1010 is the same as that of the PU 1020, the PU 1040 may not have the same motion information as that of the PU 1030. If the motion information of the PU 1010 is the same as that of the PU 1020 and the motion information of the PU 1040 is the same as that of the PU 1030, it is more efficient to encode PU partitions divided into a block of the PU 1010 and the PU 1020 and a block of the PU 1030 and the PU 1040 rather than four PUs. Therefore, in FIG. 10, when motion information of the PU 1010 is the same as that of the PU 1020, the PU 1040 needs to have the motion information different from that of the PU 1030. That is, the motion information of the PU 1030 may be allowed not to be added to a merge candidate list of the PU 1040.

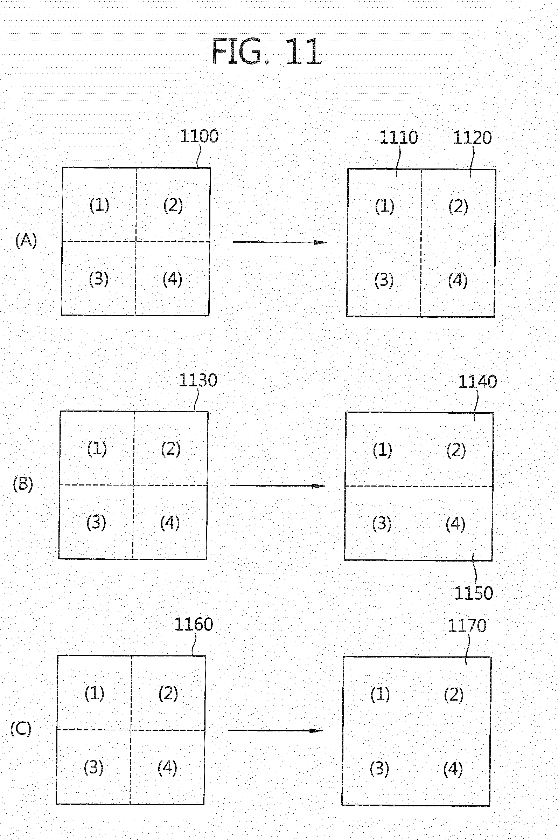

FIG. 11 is a diagram schematically showing a relationship between the PUs divided from the CU that is described with reference to FIG. 10.

Referring to FIG. 11A, a CU 1100 is divided into four PUs 1 to 4. However, if the PU1 and the PU3 have the same motion information and the PU2 and PU4 have the same motion information, it is more efficient to divide the CU 1100 into two PUs 1110 and 1120 as described above in consideration of encoding efficiency.

Referring to FIG. 11B, a CU 1130 is divided into four PUs 1 to 4. However, if the PU1 and the PU3 have the same motion information and the PU2 and PU4 have the same motion information, it is more efficient to divide the CU 1130 into two PUs 1140 and 1150 as described above in consideration of encoding efficiency.

Further, referring to FIG. 11C, a CU 1160 is divided into four PUs 1 to 4. However, if the PUs 1 to 4 have the same motion information, it is more efficient to perform encoding on a single CU 1160, that is, a single PU 1170 in consideration of encoding efficiency.

As described above, since the PUs divided from the single CU have the different motion information, it is possible to determine an information amount required for performing the merge using the different motion information. That is, when a single CU is divided into two PUs, the respective PU partitions have different motion information. In other words, the two PU partitions (a PU partition of which PartIdx is 0 and a PU partition of which PartIdx is 1) may not have the same motion information. Therefore, the same motion information as that of the PU partition of which PartIdx is 0 may be allowed not to be added to a merge candidate list of the PU partition of which PartIdx is 1.

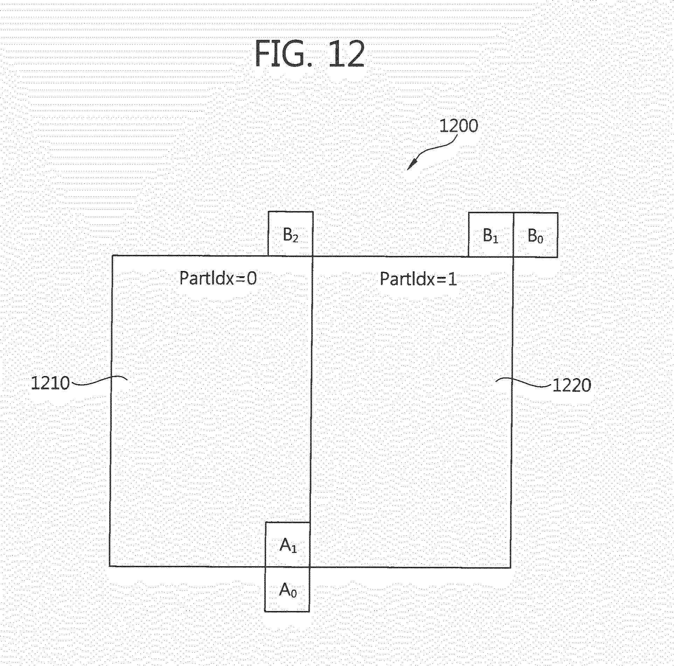

FIG. 12 is a diagram schematically showing blocks that may become merge candidate blocks of a current block among neighboring blocks of a current PU when a single CU 1200 is divided into two PUs 1210 and 1220. Referring to FIG. 12, as described above, when it is assumed that a current PU 1220 is a PU partition of which PartIdx is 1, motion information of a block having the same motion information as that of a left PU 1210 of which PartIdx is 0 among motion information of A1, B1, B0, A0, and B2, which are neighboring blocks of the current PU 1220 may not be used as a motion information candidate of the current PU 1220.

Therefore, the same motion information as that of the PU partition of which PartIdx is 0 may be allowed not to be added to a merge candidate list of the PU partition of which PartIdx is 1. For example, when the motion information of B1 is the same as that of the PU partition of which PartIdx is 0, the motion information of B1 is not added to a merge candidate list of the PU partition of which PartIdx is 0.

Table 1 shows an example of a method of determining an information amount of merge in the system according to the exemplary embodiment of the present invention.

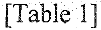

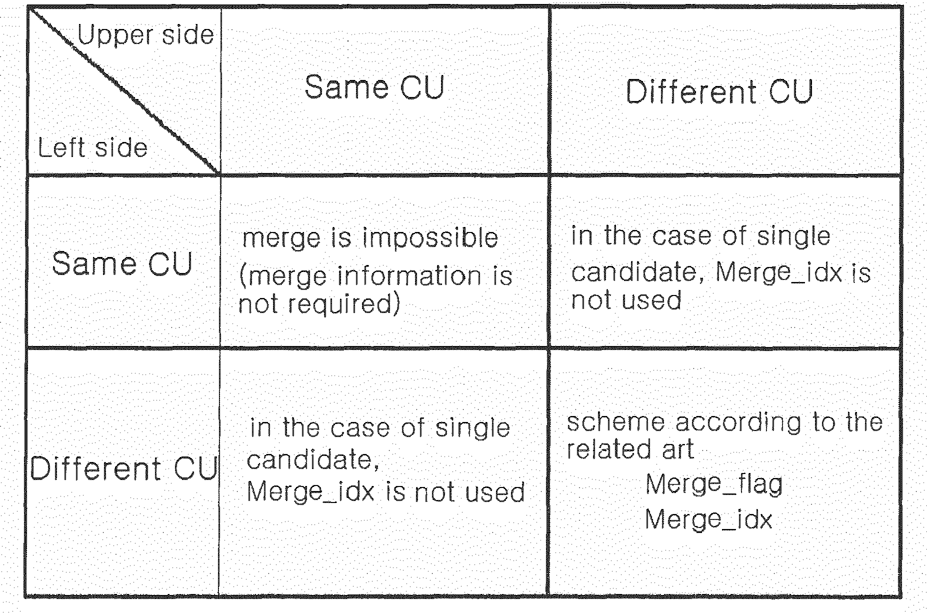

More specifically, Table 1 shows an example of determining a kind and an amount of information to be transmitted in the case in which the merge is applied to the current block based on the contents described above with respect to whether the PUs divided from the single CU may have the same motion information.

In the example of Table 1, when a neighboring block is a block present in a CU in which a current block (for example, a PU) is present, a corresponding neighboring block is not used as a merge candidate for the current block. That is, the motion information of the corresponding neighboring block is not used as the merge candidate of the current block so that the motion information of the corresponding neighboring block is not used as the motion information of the current block. Here, a candidate block having motion information thatthe motion information of the current block merges to may be determined based on partition information of the current block as described above.

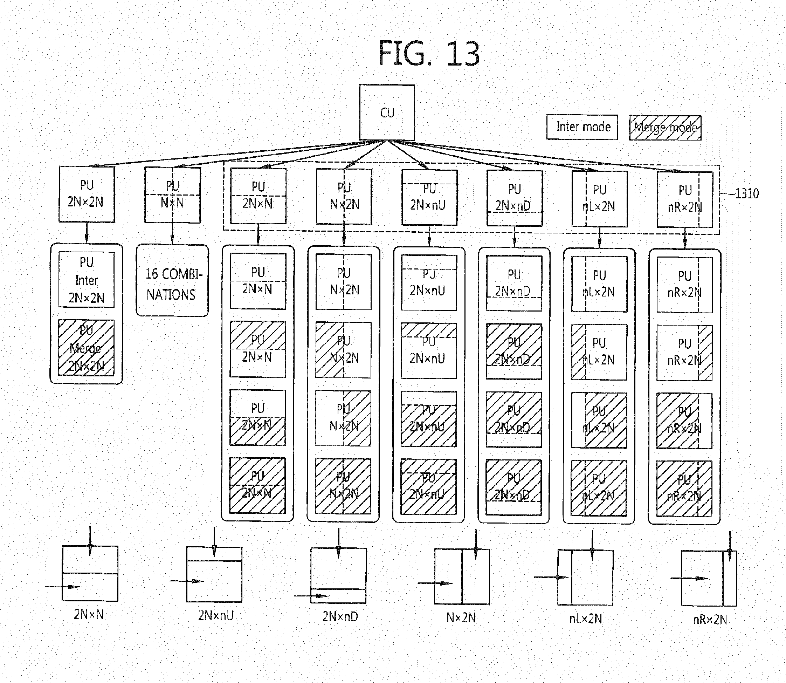

FIG. 13 is a diagram showing an example of merging a current block in the case in which a neighboring block and the current block are different blocks in the same CU. In FIG. 13, a case in which the current block and the neighboring block are different PUs in the same CU will be described by way of example.

Referring to FIG. 13, as a case 1310 in which two PUs are present in the same CU, there are a case of a PU which is PART_2NxN, a case of a PU which is PART_Nx2N, a case of a PU which is PART_2NxnU, a case of a PU which is PART_2NxnD, a case of a PU which is PART_nLx2N, and a case of a PU which is PART_nRx2N.

The neighboring blocks that become candidate blocks of each PU may be determined from partition information of the PU in the CU. For example, in the case of the PU which is PART_2NxN, an upper PU may be merged with upper neighboring blocks and a lower PU may be merged with left neighboring blocks. In the case of the PU which is PART_Nx2N, a left PU may be merged with left neighboring blocks and a right PU may be merged with upper neighboring blocks. In the case of the PU which is PART_2NxnU, an upper PU may be merged with upper neighboring blocks and a lower PU may be merged with left neighboring blocks. In the case of the PU which is PART_2NxnD, an upper PU may be merged with upper neighboring blocks and a lower PU may be merged with left neighboring blocks. In the case of the PU which is PART_nLx2N, a left PU may be merged with left neighboring blocks and a right PU may be merged with upper neighboring blocks. In the case of the PU which is PART_nRx2N, a left PU may be merged with left neighboring blocks and a right PU may be merged with upper neighboring blocks.

Whether the merge is performed on each PU in the same CU is determined. Information on whether the merge is performed on the PU may be indicated by the merge_flag. Whether the merge is performed on the PU may be determined by a predetermined module (for example, a motion predictor) in the encoder or the decoder. When the merge is performed on the PU, a target block of the merge may be determined by the partition information of the PU in the CU as described above.

In the case of FIG. 13, when the target block of the merge is judged from the partition information of the PU in the CU, since a single candidate block of the PU for merging is present, information such as the merge_left_flag indicating a candidate block to be merged, or the like, needs not to be transmitted even in the case in which the merge is performed on the PU. The decoder may specify the merge target of the current block based on the partition information of the current CU.

However, in FIG. 13, information on the merge, for example, information on a merge target is transmitted to the decoder with respect to the PU of which is PART_2Nx2N and the PU which is PART_NxN.

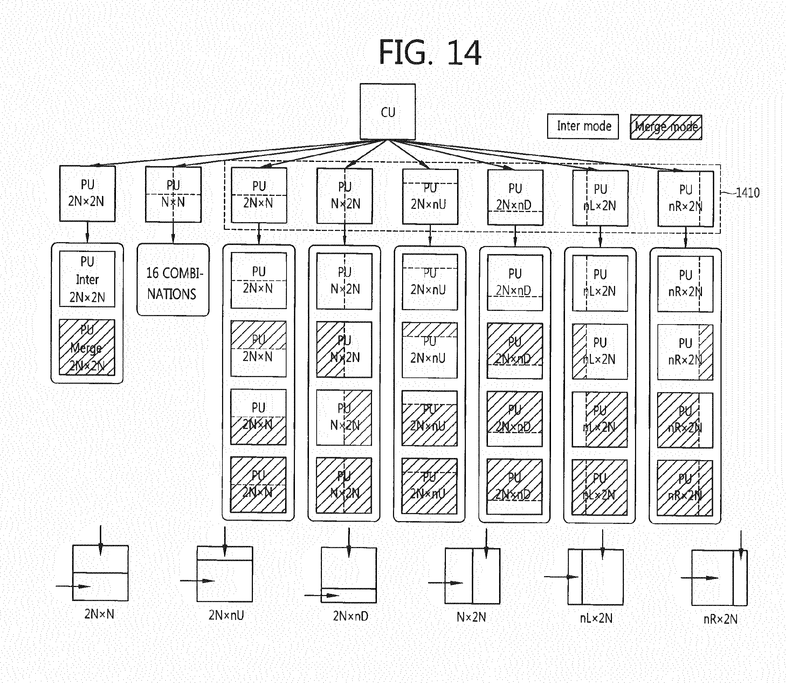

FIG. 14 is a diagram showing another example of merging a current block in the case in which a neighboring block and the current block are different blocks in the same CU. In FIG. 14, a case in which the current block and the neighboring block are different PUs in the same CU will be described by way of example.

In the example of FIG. 14 unlike the example of FIG. 13, the merge is not applied to the PU of which is PART_2Nx2N and the PU which is PART_NxN, thereby making it possible to reduce complexity and a transmission amount of information.

Even in the example of FIG. 14, in a case 1410 in which two PUs are present in the same CU, that is, a case of a PU which is PART_2NxN, a case of a PU which is PART_Nx2N, a case of a PU which is PART_2NxnU, a case of a PU which is PART_2NxnD, a case of a PU which is PART_nLx2N, and a case of a PU which is PART_nRx2, as shown, it is possible to determine motion information candidates that are to be used as the motion information of the PU based on the partition information of the CU, similar to FIG. 13.

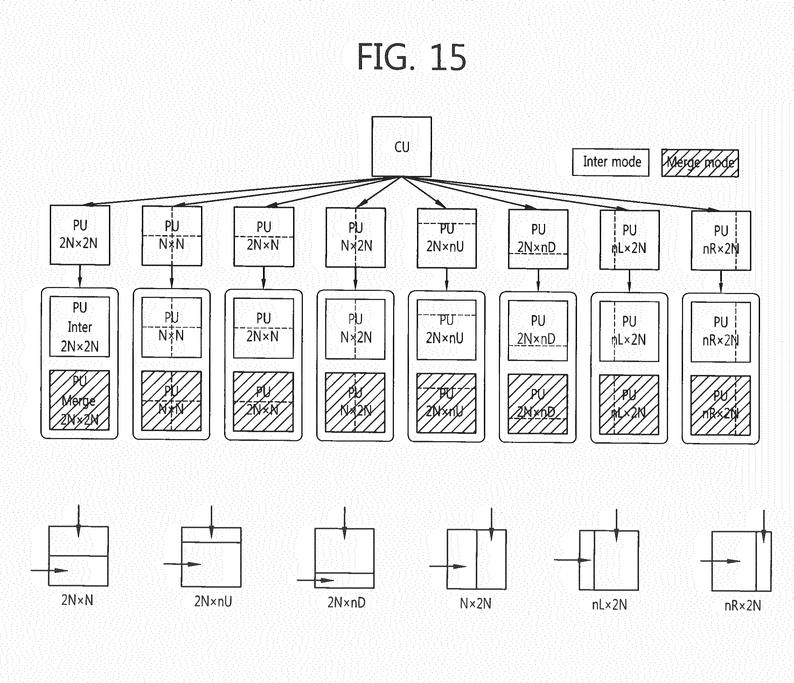

FIG. 15 is a diagram showing still another example of merging a current block in the case in which a neighboring block and the current block are different blocks in the same CU. In FIG. 15, a case in which the current block and the neighboring block are different PUs in the same CU and merge is performed in a CU unit will be described by way of example.

Referring to FIG. 15, in the case of the merge in the CU unit, two merge types may be considered for each PU partition (PART_2Nx2N, PART_NxN, PART_2NxN, PART_Nx2N, PART_2NxnU, PART_2NxnD, PART_nLx2N, and PART_nRx2N). In the case of FIG. 15, candidate blocks according to the partitions of the PU in the CU may be determined in the same scheme as the examples of FIGS. 13 and 14.

In the case of a general prediction mode, a current CU may be divided into a PU unit (variable block size) and then predicted. However, in the case of performing the merge in the CU unit, whether or not the merge is performed in the CU unit through the merge_flag is determined, and the neighboring blocks on which the merge is to be performed are determined through the partition information of a corresponding CU in each PU of the corresponding CU. Here, only a single merge_flag is transmitted in the CU unit. In the case in which it is determined that the merge is performed in the CU unit, the merge is performed on all PUs in the CU. In the case in which it is determined that the merge is not performed in the CU unit, the merge is not performed on all PUs in the CU but a general encoding method (inter prediction except for the merge) is performed.

In the case of the merge in the CU unit, the merge_left_flag is not transmitted with respect to a corresponding CU and the PUs in the CU. The decoder may determine neighboring blocks to be merged on each PU in the CU based on the partition information of the PU in the CU.

In the case of the PUs of which are PART_2Nx2N and PART_NxN, merge information may be transmitted to the decoder, and the decoder may perform the merge based on the received merge information.

Meanwhile, when four PUs are present in a single CU, one of the four PUs is a current block, and some of the four PUs have the same motion information, it is required to consider merge information of a previous PU (another PU in the current CU) as well as merge information of a current PU in order to determine a merge target of the current block.

As described above, when the CU is divided into the four PUs, all of the motion information on the four PUs may not be the same. Therefore, when some of the four PUs have the same motion information, it is required to consider merge information of a previous PU partition as well as merge information of a current PU partition in order to determine the merge target of the current block.

Referring to FIG. 10, the PU 1010, the PU 1020, and the PU 1030 are merged with each other, the PU 1040 may not be merged with the PU 1010, the PU 1020, and the PU 1030. That is, the PU 1040 may not be merged with the neighboring blocks, and it may be judged from the decoder that the PU1040 may not be merged with the PU 1010, the PU 1020, and the PU 1030 even though the merge information on the PU 1040 is not transmitted. In addition, it is possible to determine a merge target of a current block using partition information (for example, partition information of the PU) of a CU (a current CU) to which the current block belongs and partition information of neighboring blocks.

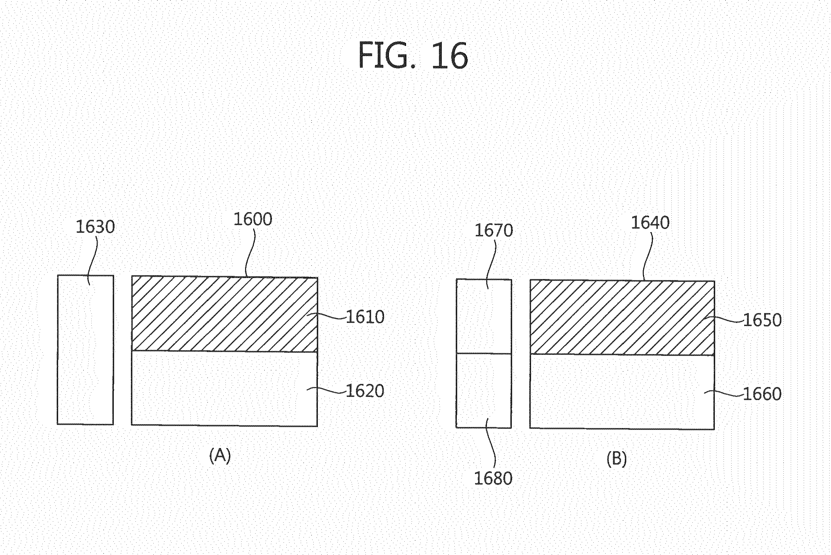

FIG. 16 is a diagram schematically describing an example of determining merge information of a current block using merge information of another block with respect to two blocks (for example, PUs) in the same CU.

In the case in which at least two PUs are present in the same CU, when merge information on a PU after a second PU is encoded, merge information of a PU that is previously encoded in the same CU may be used. Here, the block (for example, PU) after a second block may be a right PU or a lower PU, that is, a PU of which PArtIdx is 1 in the case in which a current PU is divided into two PUs such as PART_2NxN or PART_N_2N. In the case in which the current PU is PART_NxN, a PU having a PartIdx value of 1, 2, or 3 may be the PU after the second PU.

For example, as shown in FIG. 16A, in the case in which one 1610 (PartIdx=0) of two PUs 1610 and 1620 in a CU 1300 is merged with a left block 1630, the merge is not applied to a current block 1620 (PartIdx=1). The meaning that the PU 1610 is merged with the left block 1630 is that motion information of the PU 1610 is the same as that of the left block 1630. Therefore, motion information of the current block 1620 is different from that of the left block 1630 as described above, and the current block 1620 may not be merged with the left block 1630.

In addition, as shown in FIG. 16A, in the case in which one 1610 (Partldx=0) of the two PUs 1610 and 1620 in the CU 1600 is merged with the left block 1630, the motion information of the left block 1630 may not be added to a merge candidate list of the current block 1620 (PartIdx=1). The meaning that the PU 1610 is merged with the left block 1630 is that motion information of the PU 1610 is the same as that of the left block 1630. Therefore, motion information of the current block 1620 is different from that of the left block 1630 as described above, and the current block 1620 may not be merged with the left block 1630.

Further, in an example of FIG. 16B, in the case in which one 1650 of two PUs 1650 and 1660 in a CU 1640 is merged with a left block 1670, a neighboring block with which a current block 1660 may be merged becomes a left block 1680. In this case, a spatial target with which the current block 1660 may be merged is only the left block 1680. Therefore, the encoder may simply transfer only the merge_flag to the decoder without indicating a merge target through the merge_left_flag, or the like, even though two neighboring blocks are present.

In this case, when the received merge_flag indicates that the current block 1660 is merged, the decoder may confirm merge information of another block 1650 in the same CU. When it is confirmed that another block 1650 is merged with the left block 1670, a merge target of the current block 1660 may be specified even though information (for example, a merge_left_flag) indicating the merge target of the current block 1660 is not present.

Meanwhile, as described above, blocks of specific positions among the neighboring blocks of the current block may be determined as the merge candidate blocks of the current block in advance, and the motion information of the current block may be predicted using the motion information of the merge candidate block.

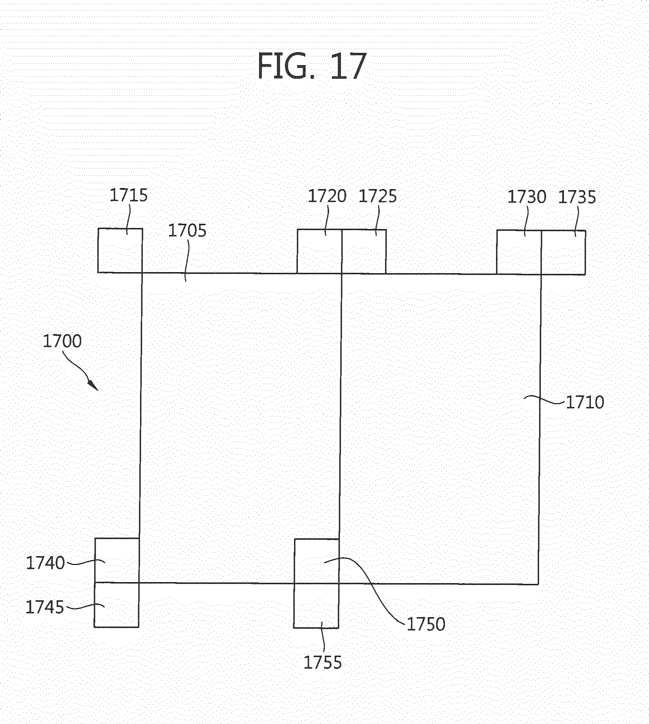

FIG. 17 is a diagram schematically showing an example of determining motion information of a current block using motion information of another block in the case of limiting merge candidate blocks as predetermined neighboring blocks. FIG. 17 shows a case in which two blocks 1705 and 1710 are present in a current CU 1700 by way of example. In FIG. 17, the two blocks 1705 and 1710 may be blocks which are PART_Nx2N, PART_nLx2N, or PART_nRx2N, and be PUs.

As described above, spatial merge candidates for the current block may be a predetermined neighboring block positioned at an upper portion of the current block and a predetermined neighboring block positioned at a left of the current block.

For example, in the case in which the block 1705 is merged, as shown in FIG. 8, a neighboring block 1715 positioned at a left upper portion of the block 1705, a neighboring block 1720 positioned at an upper portion of the block 1705, a neighboring block 1725 positioned at a right upper portion of the block 1705, a neighboring block 1740 positioned at a left of the block 1705, and a neighboring block 1745 positioned at a left lower portion of the block 1705 may become spatial merge candidate blocks for the block 1705.

As described with reference to FIG. 16, merge information of another block may be used to determine merge information of a corresponding block (a current block) with respect to a block after a second block among blocks (for example, PUs) in a current CU.

For example, in FIG. 17, when it is assumed that the block 1710 is a current block, merge information of the current block 1710 may be determined using merge information of another block 1705. In FIG. 17, a neighboring block 1720 positioned at a left upper portion of the current block 1710, a neighboring block 1730 positioned at an upper portion of the current block, a neighboring block 1735 positioned at a right upper portion of the current block, a neighboring block 1750 positioned at a left of the current block, and a neighboring block 1755 positioned at a left lower portion of the current block may become spatial merge candidate blocks for the current block 1710.

Here, a block with which another block 1705 in the same CU 1700 is merged may not become the merge candidate block of the current block. Therefore, when the block 1705 is merged with the neighboring block 1720 in FIG. 17, the neighboring block 1720 is excluded from the merge candidate blocks of the current block 1710. The merge information (for example, the merge_idx) on the current block 1710 may be generated by excluding the neighboring block 1720 from the merge candidate blocks of the current block 1710 based on information that another block 1705 is merged with the neighboring block 1720.

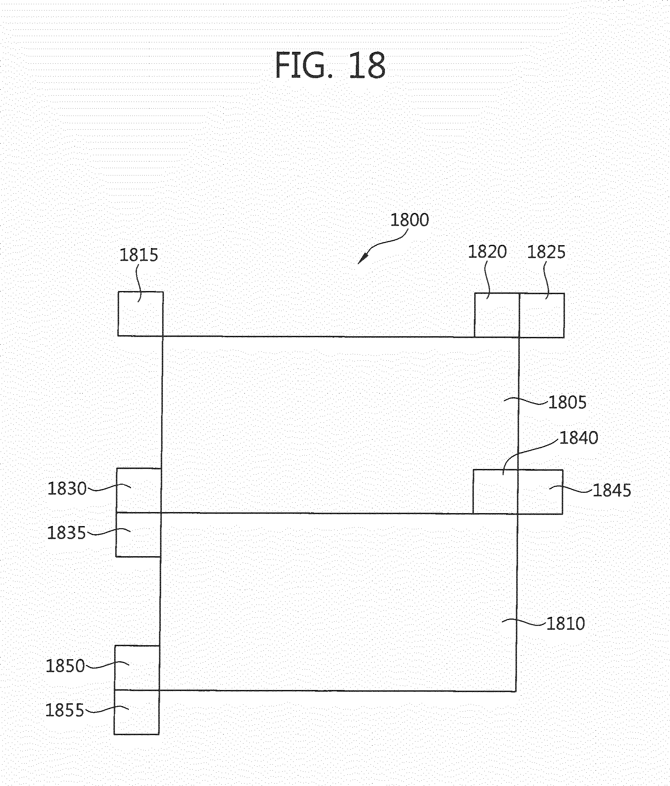

FIG. 18 is a diagram schematically showing another example of determining motion information of a current block using motion information of another block in the case of limiting merge candidate blocks as predetermined neighboring blocks. FIG. 18 shows a case in which two blocks 1800 and 1805 are present in a current CU 1800 by way of example. In FIG. 18, the two blocks 1805 and 1810 may be blocks which are PART_2NxN, PART_2NxnN, or PART_2NxnD, and be PUs.

When the block 1805 is merged in the example of FIG. 18, blocks 1815, 1820, 1825, 1830, and 1835 among neighboring blocks of the block 1805 may become spatial merge candidate blocks for the block 1805, as described with reference to FIG. 8.

In FIG. 18, when it is assumed that the block 1810 is a current block, merge information of the current block 1810 may be determined using merge information of another block 1805. In FIG. 18, a neighboring block 1830 positioned at a left upper portion of the current block 1810, a neighboring block 1840 positioned at an upper portion of the current block, a neighboring block 1845 positioned at a right upper portion of the current block, a neighboring block 1850 positioned at a left of the current block, and a neighboring block 1855 positioned at a left lower portion of the current block may become spatial merge candidate blocks for the current block 1810.

Here, a block with which another block 1805 in the same CU 1800 is merged may not become the merge candidate block of the current block 1810. Therefore, when the block 1805 is merged with the neighboring block 1830 in FIG. 18, the neighboring block 1830 is excluded from the merge candidate blocks of the current block 1810. The merge information (for example, the merge_idx) on the current block 1810 may be generated by excluding the neighboring block 1830 from the merge candidate blocks of the current block 1810 based on information that another block 1805 is merged with the neighboring block 1830.

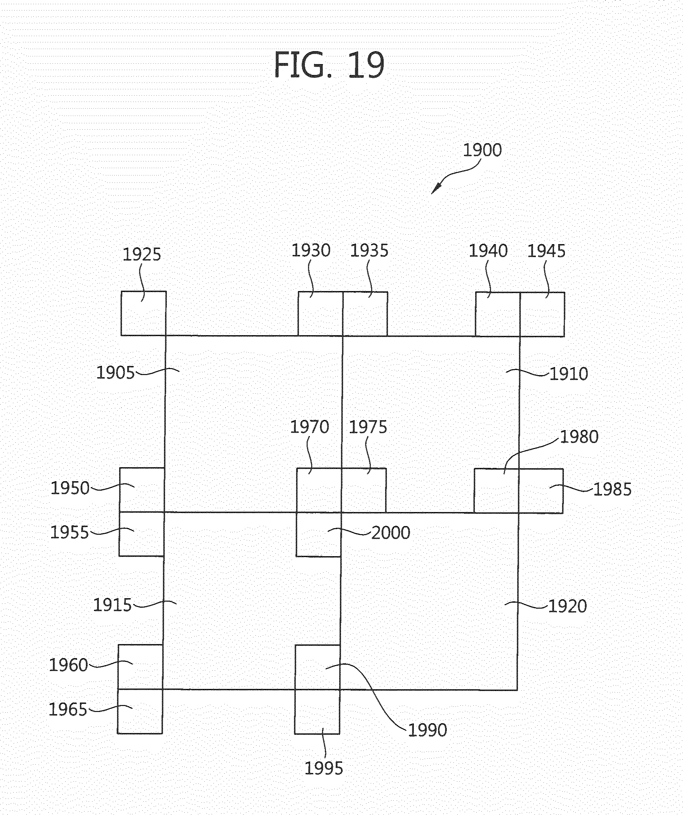

FIG. 19 is a diagram schematically showing another example of determining motion information of a current block using motion information of another block in the case of limiting merge candidate blocks as predetermined neighboring blocks. FIG. 19 shows a case in which four blocks 1905, 1910, 1915, and 1920 are present in a current CU 1900 by way of example. In FIG. 19, the four blocks 1905, 1910, 1915, and 1920 may be blocks which are PART_NxN, and be PUs.

When the block 1905 is merged in the example of FIG. 19, blocks 1925, 1930, 1935, 1950, and 1955 among spatial neighboring blocks of the block 1905 may become merge candidate blocks for the block 1905, as described with reference to FIG. 8. When the block 1910 is merged, blocks 1930, 1940, 1945, 1970, and 2000 among spatial neighboring blocks of the block 1910 may become merge candidate blocks for the block 1910. In addition, when the block 1915 is merged, blocks 1950, 1970, 1975, 1960, and 1965 among spatial neighboring blocks of the block 1915 may become merge candidate blocks for the block 1915. When the block 1920 is merged, blocks 1970, 1980, 1985, 1990, and 1995 among spatial neighboring blocks of the block 1920 may become merge candidate blocks for the block 1920. Among them, the block 1985 and the block 1995 may become spatial merge candidate blocks for the block 1920 in the case in which corresponding blocks are decoded.

Also in FIG. 19, merge information of the current block may be determined using merge information of another block.

In FIG. 19, when it is assumed that the block 1920 is a current block, in the case in which the block 1905, the block 1910, and the block 1915 are merged as in the case of FIG. 10, merge information of the current block 1920 may be determined using merge information of the block 1905, the block 1910, and the block 1915. For example, a case in which the block 1905 and the block 1910 are merged with the neighboring block 1930 and the block 1915 is merged with the neighboring block 1970 or the neighboring block 1975 may be considered. In this case, three different blocks 1905, 1910, and 1915 in the same CU 1900 have the same motion information. Therefore, the current block 1920 may not be merged with the neighboring blocks 1970, 1980, and 1990, and may be merged with one of the neighboring block 1995 and the neighboring block 1985 having motion information different from that of the blocks 1905, 1910, and 1915. Among them, the block 1985 and the block 1995 may become spatial merge candidate blocks for the block 1920 in the case in which corresponding blocks are decoded.

In this case, since the number of candidate blocks with which the current block 1920 may be merged is 2, that is, the neighboring block 1995 and the neighboring block 1985, the merge candidate blocks of the current block 1920 may also be indicated using the merge_left_flag.

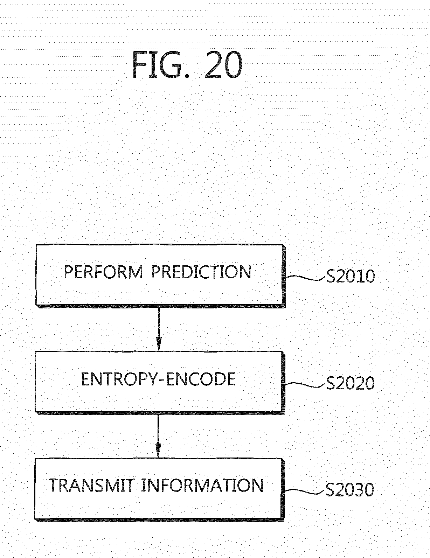

FIG. 20 is a flow chart schematically describing operations of an encoder in the system according to the exemplary embodiment of the present invention.

Referring to FIG. 20, the encoder performs prediction for a current block (S2010). When a prediction mode for the current block (a current PU) is not an intra mode, a merge mode may also be applied to the current block. Here, motion information of the current block, for example, whether the merge mode is applied, with motion information of what neighboring block the current block is merged, and the like, may also be determined by motion information of another block (for example, another PU) present in a CU in which the current block is present. A detailed content thereof has been described with reference to FIG. 3.

After the encoder performs the prediction for the current block, it entropy-encodes information on a prediction result (S2020). For example, the encoder may entropy-encode a prediction block for the current block, information required to perform the prediction for the current block, and the like.

The encoder may transmit the entropy-encoded information to the decoder through the bit stream (S2030).

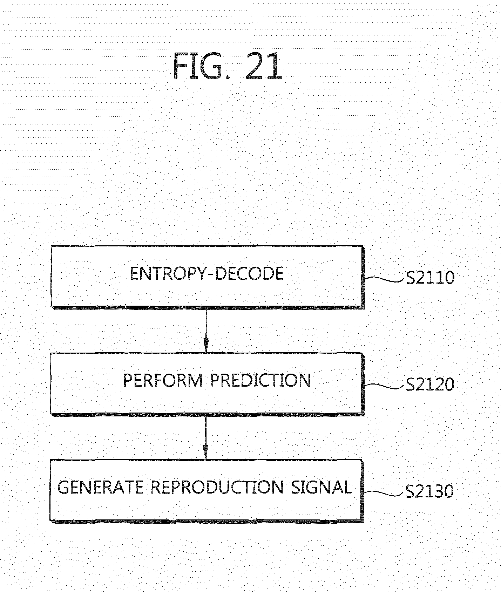

FIG. 21 is a flow chart schematically describing operations of a decoder in the system according to the exemplary embodiment of the present invention.

Referring to FIG. 21, the decoder entropy-decodes the video information received from the encoder (S2110). The video information is transmitted to the decoder in a state in which it is included in the bit stream transmitted from the encoder. The video information includes the prediction block for the current block, the residual block, the information for prediction, and the like.

The decoder performs prediction for the current block based on the entropy-decoded information (S2120). When the current block is an inter prediction mode, motion information of the current block may be induced from partition information of the current CU, or the like. For example, the decoder may induce a portion or all of the information such as information on whether the merge may be applied to the current block, information on how many motion information candidates are present, information on with what motion information candidate the current block is merged, and the like. In this case, the decoder may also induce the motion information of the current block using motion information on another PU in the CU in which the current block is present. A detailed content thereof has been described with reference to FIG. 4.

The decoder may generate a reproduction signal based on the prediction result to reproduce a video (S2130).

In the above-mentioned exemplary system, although the methods have described based on a flow chart as a series of steps or blocks, the present invention is not limited to a sequence of steps but any step may be generated in a different sequence or simultaneously from or with other steps as described above. In addition, the above-mentioned embodiments include examples of various aspects. Therefore, the present invention should be construed as including all other substitutions, alterations and modifications belong to the following claims.

In the description of the present invention described above, it is to be understood that when one element is referred to as being "connected to" or "coupled to" another element, it may be "directly connected to" or "directly coupled to" another element or be connected to or coupled to another element, having the other element intervening therebetween. On the other hand, it is to be understood that when one element is referred to as being "directly connected to" or "directly coupled to" another element, the other element is not present between two elements.

## Claims

1. A method of encoding video information, the method comprising the steps of:
performing prediction for a current block; and
entropy-encoding and transmitting the predicted information,
wherein the performing of the prediction includes the steps of:
obtaining motion information of neighboring blocks from the neighboring blocks of the current block; and
determining motion information of the current block based on the obtained motion information, and
wherein in the step of entropy-encoding and transmitting, information required to predict the current block is transmitted together with the predicted information.

2. The method of claim 1, wherein the neighboring block is a block belonging to a coding unit to which the current block belongs, and
the motion information of the neighboring block includes partition information of the coding unit.

3. The method of claim 1, wherein in the step of determining motion information of the current block, the motion information of the neighboring block and the same motion information as the motion information of the neighboring block are excluded from merge candidates of the current block when the neighboring block belongs to a coding unit to which the current block belongs.

4. The method of claim 1, wherein in the step of performing prediction, the motion information of the current block is not merged with the same motion information as motion information of another block belonging to a coding unit to which the current block belongs.

5. The method of claim 1, wherein when a motion information candidate that is not the same as motion information of another block belonging to a coding unit to which the current block belongs is present among the motion information of the neighboring blocks of the current block and the motion information of the current block is predicted in a merge mode, in the step of determining motion information of the current block, the motion information of the current block is merged with the motion information candidate.

6. The method of claim 1, wherein when the current block is a PART_NxN block and when motion information of three blocks belonging to a coding unit to which the current block belongs is the same, in the step of performing prediction, the motion information of the current block is not merged with the motion information of the three blocks belonging to the coding unit to which the current block belongs.

7. A method of decoding video information, the method comprising the steps of:
receiving a bit stream;
entropy-decoding video information included in the bit stream; and
performing prediction for a current block based on the entropy-decoded video information,
wherein the step of performing prediction includes the steps of:
obtaining motion information of neighboring blocks from the neighboring blocks of the current block; and
determining motion information of the current block based on the obtained motion information.

8. The method of claim 7, wherein the neighboring block is a block belonging to a coding unit to which the current block belongs, and
the motion information of the neighboring block includes partition information of the coding unit.

9. The method of claim 7, wherein in the step of determining motion information of the current block, the motion information of the neighboring block and the same motion information as the motion information of the neighboring block are excluded from merge candidates of the current block when the neighboring block belongs to a coding unit to which the current block belongs.

10. The method of claim 7, wherein in the step of performing prediction, the motion information of the current block is not merged with the same motion information as motion information of another block belonging to a coding unit to which the current block belongs.

11. The method of claim 7, wherein when a motion information candidate that is not the same as motion information of another block belonging to a coding unit to which the current block belongs is present among the motion information of the neighboring blocks of the current block and the motion information of the current block is predicted in a merge mode, in the step of determining motion information of the current block, the motion information of the current block is merged with the motion information candidate.

12. The method of claim 7, wherein when the current block is a PART_NxN block and motion information of three blocks belonging to a coding unit to which the current block belongs is the same, in the step of performing prediction, the motion information of the current block is not merged with the motion information of the three blocks belonging to the coding unit to which the current block belongs.
